Europäisches Patentamt

European Patent Office

Office européen des brevets

(19)

(11) **EP 0 692 663 A1**

(12) **DEMANDE DE BREVET EUROPEEN**

(43) Date de publication:
**17.01.1996 Bulletin 1996/03**

(51) Int Cl.$^6$: **F16K 39/02**

(21) Numéro de dépôt: **95401669.7**

(22) Date de dépôt: **12.07.1995**

(84) Etats contractants désignés:
**DE GB**

(30) Priorité: **15.07.1994 FR 9408812**

(71) Demandeur: **DESGRANGES ET HUOT S.A.**
**F-93300 Aubervilliers (FR)**

(72) Inventeur: **Cohen, Simon**
**F-75116 Paris (FR)**

(74) Mandataire: **Ballot, Paul Denis Jacques et al**
**F-75116 Paris (FR)**

(54) **Vanne hydraulique à contre réaction**

(57)     L'invention concerne une vanne hydraulique permettant l'ouverture et la fermeture d'un circuit hydraulique, comprenant un piston (5) coulissant à l'intérieur d'un corps (1) doté d'au moins une entrée (6) et une sortie (7) d'un fluide, et des moyens de commande (15) accouplés au piston, caractérisée en ce que le piston (5) comporte un épaulement (9) coulissant dans une chambre à volume variable (10) créée dans le corps de la vanne, est percé longitudinalement par un trou (11) amenant la pression du fluide dans la chambre et dont la section $S_9$ de l'épaulement (9) est fonction des dimensions du piston (5) et du corps (1) de telle sorte que la force exercée par le fluide dans la chambre à volume variable (10) sur l'épaulement (9) contre-balance la force exercée par le fluide sur l'extrémité (12) ouverte du piston.

FIG_1

## Description

La présente invention concerne une vanne hydraulique permettant l'ouverture et la fermeture d'un circuit hydraulique pour des pressions comprises entre 120 bars et 5000 bars et dont les dimensions sont considérablement réduites par rapport aux vannes de l'art antérieur.

Actuellement, la commande d'une vanne fonctionnant à des pressions aussi élevées suppose un vérin dans le cas d'une commande pneumatique, ou un moteur dans la cas d'une commande électrique, de très grandes dimensions, donc très encombrants et très coûteux.

Le but de l'invention est de réaliser une vanne dont les moyens de commande, qu'ils soient pneumatiques ou électriques, ont des dimensions uniques quelque soit la pression du fluide, ces dimensions étant choisies pour les plus basses pressions et restant valables pour les plus élevées.

Pour cela, l'objet de l'invention est une vanne hydraulique permettant l'ouverture et la fermeture d'un circuit hydraulique, comprenant un piston de section déterminée, coulissant dans un alésage cylindrique de section sensiblement égale faisant partie intégrante d'un corps qui est doté d'au moins une entrée et une sortie d'un fluide, et des moyens de commande accouplés audit piston, caractérisée en ce que :

- le corps comporte au niveau de l'alésage une cavité cylindrique coaxiale de section et de longueur L données;

- le piston comporte un épaulement de section sensiblement égale à la section de la cavité dans laquelle il coulisse et de longueur 1 inférieure à la longueur L de la cavité créant une chambre à volume variable dans la cavité, et il est percé longitudinalement par un trou de section inférieure à la section dudit piston, à partir de son extrémité communiquant avec le fluide du circuit hydraulique jusqu'à la chambre avec laquelle il communique par un trou transversal pour ramener la pression du fluide dans la chambre.

Selon une autre caractéristique de l'invention, la section de l'épaulement du piston est déterminée en fonction des sections respectives , ou bien encore des diamètres, du piston, de l'alésage dans lequel il se déplace et du trou percé dans le piston, de telle sorte que la force exercée par le fluide dans la chambre à volume variable sur l'épaulement soit supérieure à la force exercée par le fluide sur l'extrémité ouverte du piston dans le cas d'une vanne normalement fermée.

Selon une autre caractéristique de l'invention, la section de l'épaulement du piston est déterminée en fonction des sections respectives du piston, de l'alésage dans lequel il se déplace et du trou percé dans le piston de telle sorte que la force exercée par le fluide dans la chambre sur l'épaulement soit inférieure à la force exercée par le fluide sur l'extrémité ouverte du piston dans le cas d'une vanne normalement ouverte.

Selon une autre caractéristique de l'invention, le corps de la vanne se compose de deux parties, un corps principal doté d'une sortie hydraulique individuelle de la vanne, et un corps de jonction, doté d'une entrée hydraulique individuelle parallèle à la sortie hydraulique, et de deux entrées hydrauliques de raccordement, disposées selon une direction perpendiculaire à l'entrée individuelle et dans le même plan transversal, le corps principal et le corps de jonction ayant des sections transversales identiques et étant solidaires grâce à des moyens de fixation.

D'autres caractéristiques et avantages de l'invention apparaîtront à la lecture de la description suivante d'un exemple particulier de réalisation, cette description étant faite en relation avec les dessins dans lesquels :

- la figure 1 est une vue en coupe longitudinale d'une vanne selon l'invention;

- les figures $2_a$ et $2_b$ sont respectivement des vues en coupe longitudinale d'une vanne normalement fermée et d'une vanne normalement ouverte selon l'invention;

- la figure 3 est une vue en perspective d'un montage de deux vannes selon l'invention;

- la figure 4 est une vue en coupe longitudinale d'un montage de deux vannes selon l'invention;

- les figures $5_a$, $5_b$ et $5_c$ sont des vues en coupe transversale des corps de jonction respectivement d'une vanne, d'un ensemble de deux vannes montées en série et d'un ensemble de deux vannes indépendantes selon l'invention.

Les éléments qui portent les mêmes références dans les différentes figures remplissent les mêmes fonctions en vue des mêmes résultats.

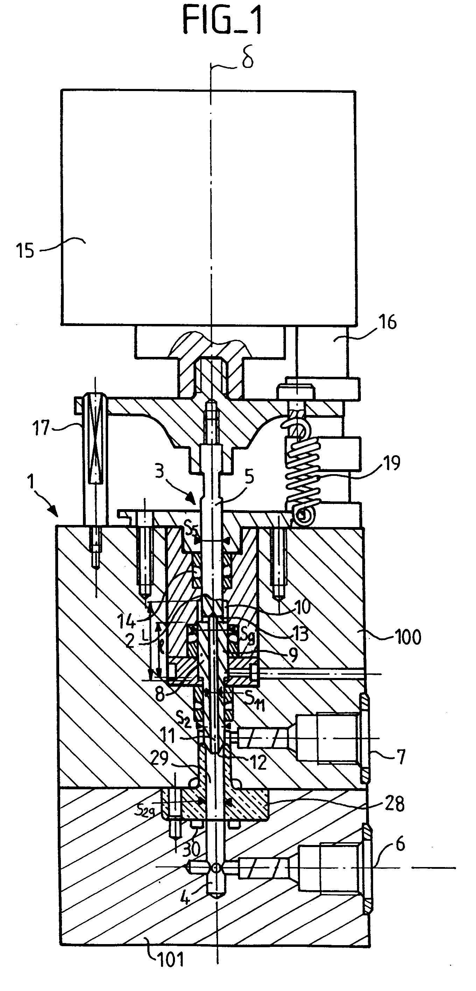

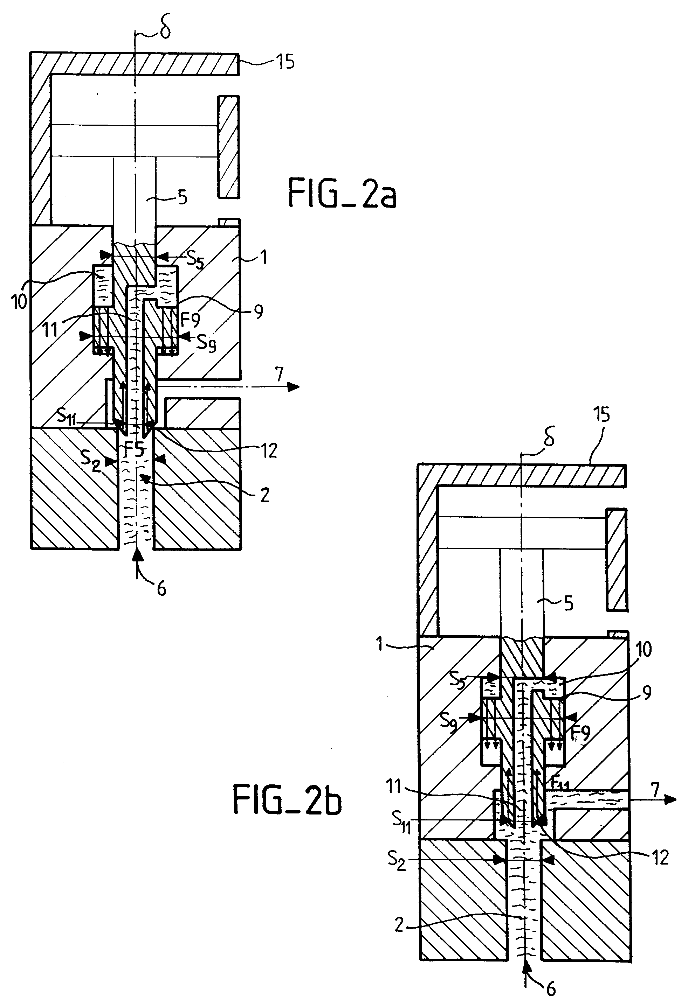

Comme l'indique la vue en coupe longitudinale de la figure 1, la vanne hydraulique selon l'invention comporte un piston 5 cylindrique qui coulisse dans un alésage 2 creusé dans un corps 1, pouvant être de section carrée, selon son axe $\delta$ de symétrie longitudinale à partir d'une de ses extrémités 3 jusqu'à la canalisation 4 d'entrée du circuit hydraulique dont la vanne doit assurer l'ouverture et la fermeture. Le piston 5, de section $S_5$ sensiblement égale à la section $S_2$ de l'alésage 2, reçoit et transmet une pression exercée par le fluide du circuit hydraulique et se déplace selon un mouvement rectiligne alternatif dans l'alésage de manière à autoriser ou au contraire à empêcher la circulation du fluide de l'entrée 6 du circuit hydraulique vers sa sortie 7. Le piston 5 a une forme effilée vers l'entrée du fluide dans la vanne pour neutraliser la force du fluide au niveau de l'extrémité 12 du piston 5. Des moyens de commande 15 de la vanne pilotent le déplacement du piston 5 dans l'alésage 2.

Selon l'invention, le corps 1 de la vanne comporte une cavité 8 cylindrique, de longueur L, située vers le milieu de l'alésage 2 avec lequel elle est coaxiale mais de section $S_8$ supérieure, et le piston 5 comporte un épaulement 9 de section $S_9$ sensiblement égale à la section $S_8$ de la cavité dans laquelle il coulisse et de longueur l inférieure à la longueur L de cette cavité créant ainsi une chambre 10 à volume variable dans la cavité. De plus, le piston 5 est percé longitudinalement par un trou 11 de section $S_{11}$ inférieure à la section du piston $S_5$, à partir de son extrémité 12 communicant avec le fluide du circuit hydraulique jusqu'à la chambre 10 avec laquelle il communique par un trou 13 transversal pour ramener la pression du fluide dans la chambre 10. Des joints et des paliers internes 14 assurent l'étanchéité de la vanne en évitant les fuites de fluide remontant du circuit hydraulique vers la chambre 10.

Le principe de contre-réaction réalisée dans la vanne selon l'invention consiste à soumettre en permanence la chambre à volume variable 10 à la pression du fluide du circuit hydraulique, de telle sorte que cette pression exerce, sur la section de l'épaulement 9 délimitant la chambre 10, une force contre-balançant exactement la force exercée par la pression du fluide sur l'extrémité 12 du piston 5 dans le but de concevoir une vanne qui soit normalement fermée ou ouverte à l'état de repos. Grâce à ce principe, la force de contre-réaction suffit à maintenir la vanne fermée ou ouverte, la commande de l'ouverture et de la fermeture de la vanne en fonctionnement étant obtenue par des moyens pneumatiques, un vérin 15 par exemple, ou électriques de faibles dimensions calculées pour des pressions faibles du circuit hydraulique mais également valables pour des pressions élevées pouvant atteindre 5 000 bars.

La figure $2_a$ est une coupe longitudinale d'une vanne selon l'invention, conçue pour être normalement fermée. Le fluide provenant de l'entrée 6 du circuit circule à travers le trou 11 du piston 5 et remplit la chambre 10 créant une force $F_9$ qui s'exerce sur l'épaulement 9 délimitant la chambre 10 à volume variable soumise à la pression P du fluide, et qui est égale au produit de cette pression P par la surface de l'épaulement, soit la différence entre sa section extérieure $S_9$ et sa section intérieure $S_5$ qui est celle du piston 5 :

$$F_9 = P * ( S_9 - S_5 ).$$

Cette force $F_9$ doit être supérieure ou égale à la force $F_5$ exercée par le fluide sur l'extrémité 12 du piston 5, de section égale à la différence entre la section $S_2$ de l'alésage cylindrique 2 et la section $S_{11}$ du trou 11 :

$$F_5 = P * ( S_2 - S_{11} ).$$

Les sections respectives $S_5$, $S_2$ et $S_{11}$ du piston 5, de l'alésage 2 et du trou 11, donc leurs diamètres respectifs, étant déterminées par construction du piston, il suffit de calculer la section $S_9$ de l'épaulement pour que

ces deux forces $F_9$ et $F_5$ soient égales, maintenant l'équilibre du piston en position de fermeture du circuit hydraulique quelque soit la pression P du fluide et sans l'aide de moyens supplémentaires tels qu'un vérin pneumatique. Par contre, en mode de fonctionnement tout ou rien, l'ouverture et la fermeture de la vanne sont commandées, par exemple par un vérin pneumatique 15 à deux entrées d'air.

La figure $2_b$ est une coupe longitudinale d'une vanne selon l'invention, conçue pour être normalement ouverte. Dans ce cas, la force $F_9$ que le fluide compris dans la chambre 10 à volume variable exerce sur l'épaulement 9 doit être inférieure à la force $F_{11}$ que le fluide circulant de l'entrée 6 vers la sortie 7 du circuit hydraulique exerce sur l'extrémité 12 du piston 5, définie par la différence entre la section extérieure $S_5$ du piston et la section $S_{11}$ du trou qui le perce.

La force $F_9$ est égale au produit de la pression P par la surface de l'épaulement 9, soit la différence $(S_9 - S_5)$ entre ses deux sections extérieure $S_9$ et intérieure $S_5$, et la force $F_{11}$ est égale au produit de la pression P par la différence entre la section $S_5$ du piston et la section $S_{11}$ du trou 11. .La fermeture et l'ouverture de la vanne sont assurées comme précédemment par un vérin pneumatique 15 à deux sens, à faible course, alimenté par de l'air sous une pression de six bars par exemple. Dans un autre exemple de réalisation, pour une vanne fonctionnant en mode proportionnel avec possibilité de réglage du débit du fluide en sortie, les moyens de commande de l'ouverture et de la fermeture de la vanne, qu'elle soit construite pour être normalement fermée ou ouverte au repos, sont constitués par un moteur pas à pas agissant sur le piston par l'intermédiaire d'une vis. Ce laminage du fluide est nécessaire pour gérer la pression hydraulique à des pressions de l'ordre de quelques centaines de millibars pour des pressions nominales de l'ordre du millier de bars.

Le principe de la contre-réaction exposé auparavant permet de limiter l'action de la pression du fluide sur la commande de l'ouverture et de la fermeture de la vanne; en effet, plus la pression du fluide augmente, plus la contre-réaction est importante. Un ajustement presque parfait du corps de la vanne et du piston permettrait d'obtenir un équilibre parfait des forces agissant sur l'extrémité 12 du piston et sur l'épaulement 9. En réalité les tolérances d'usinage des pièces entraînent un léger déséquilibre compensé par les moyens de commande.

Comme le montre la figure 1, des entretoises 16, au nombre de quatre par exemple, maintiennent les moyens de commande 15 solidaires du corps 1 de la vanne et des pieds d'orientation 17 reliant le piston 5 audit corps 1 évitent une rotation éventuelle de ces moyens de commande par rapport à la vanne quand une forte pression s'exerce sur le piston.

Des ressorts 19 peuvent être ajoutés entre les moyens de commande et le corps de la vanne pour vaincre les forces de frottement au niveau des joints internes lors d'un changement d'état de la vanne.

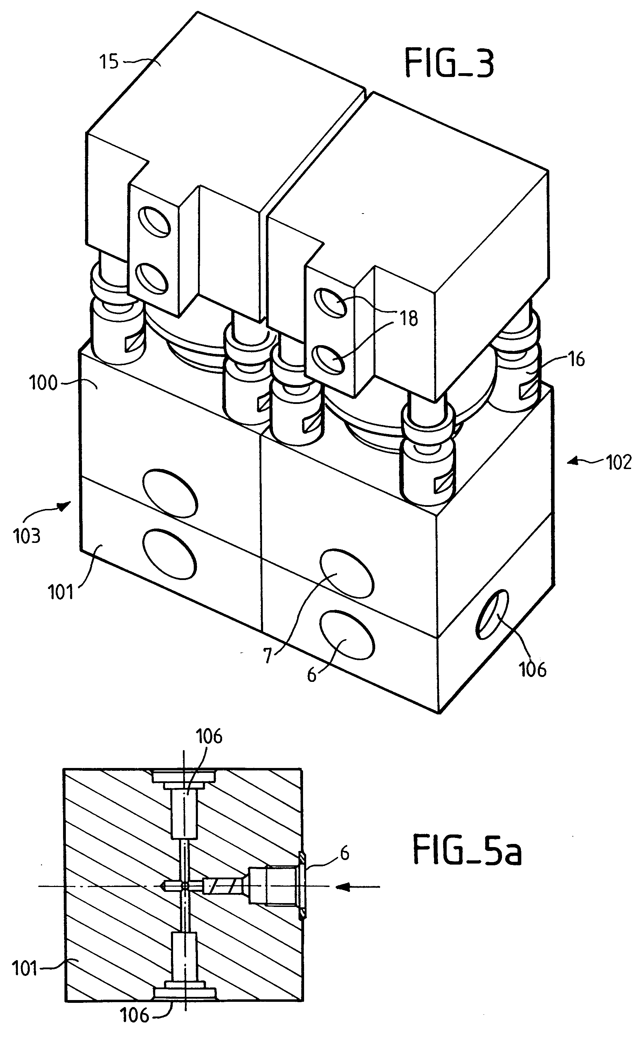

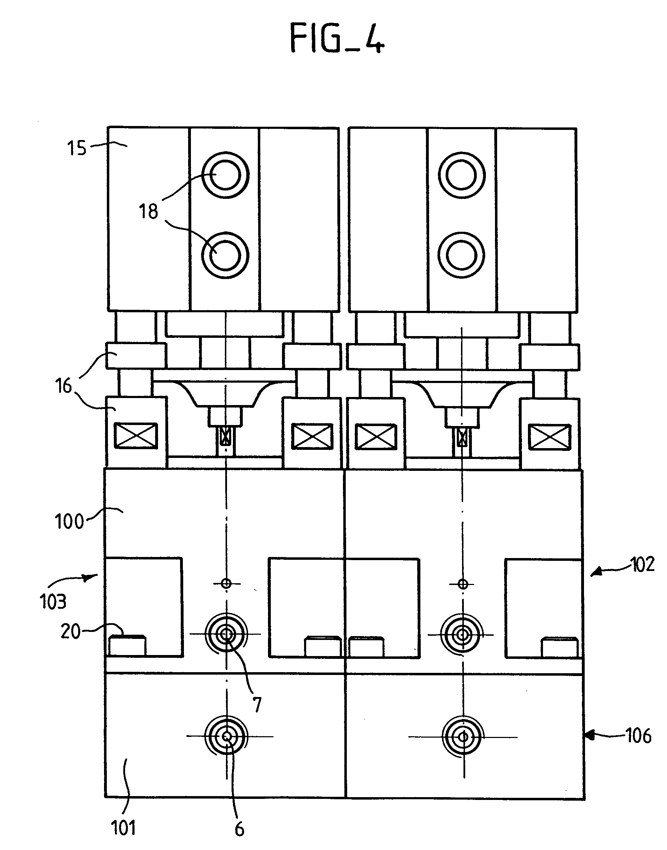

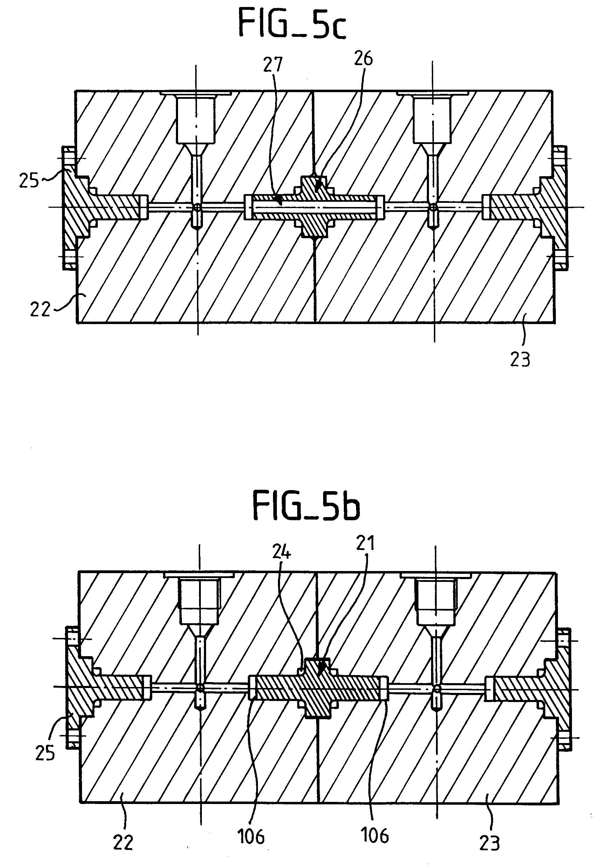

La figure 3 est une vue en perspective d'un exemple de montage de deux vannes 102 et 103 selon l'invention, composées chacune d'un corps 1 et d'un vérin de commande 15 solidaire du corps grâce à des entretoises 16 et comportant deux entrées 18 d'alimentation en air pour assurer son fonctionnement dans deux sens opposés. Selon une autre caractéristique de l'invention, le corps de la vanne se compose de deux parties, une première partie 100 constituant le corps principal proprement dit et dotée d'une sortie hydraulique individuelle 7 de la vanne, et une seconde partie 101, appelée corps de jonction, dotée d'une entrée hydraulique individuelle 6 et de deux entrées hydrauliques 106 de raccordement, disposées selon une même direction perpendiculaire à la première entrée et dans le même plan transversal. Chacune des deux entrées 106 de raccordement est destinée à être mise en correspondance avec l'entrée homologue de la vanne consécutive afin de réaliser une canalisation d'un circuit hydraulique commun auxdites vannes. Le corps principal 100 et le corps de jonction 101 ont des sections transversales identiques, de préférence carrées, et sont solidaires grâce à des moyens de fixation 20 tels que des vis, comme le montre la figure 4 qui est une vue en coupe longitudinale du même ensemble de vannes 102 et 103. L'entrée 6 et la sortie 7 hydrauliques individuelles sont parallèles tandis que les entrées 106 du circuit hydraulique commun leur sont orthogonales.

La figure $5_a$ est une vue en coupe transversale du corps de jonction 101 d'une vanne selon l'invention, sur laquelle apparaît d'une part l'entrée hydraulique 6 propre au fonctionnement individuel de la vanne et d'autre part deux entrées 106 de raccordement du circuit hydraulique commun, réalisées selon une même direction perpendiculaire à l'entrée hydraulique individuelle 6.

Dans le cas d'un circuit hydraulique n'utilisant qu'une vanne fonctionnant individuellement, deux bouchons seront placés aux deux entrées communes 106 pour assurer leur fermeture étanche et le fluide ne circulera que dans le circuit hydraulique individuel de la vanne entre son entrée 6 et sa sortie 7.

Dans le cas du montage de plusieurs circuits hydrauliques indépendants ayant chacun une vanne de commande, les vannes sont physiquement reliées les unes aux autres pour réduire l'encombrement de l'ensemble tout en conservant leurs propres circuits hydrauliques commandés individuellement. Dans ce cas (figure $5_b$), un raccord de liaison 21 pour vannes indépendantes relie deux vannes 22 et 23 par leurs entrées 106 de raccordement placées en correspondance, ce raccord étant ajusté par un épaulement et rendu étanche par des joints 24. Comme précédemment, deux bouchons 25 obstruent les entrées non utilisées du corps de jonction.

Dans le cas du montage d'un groupe de vannes ayant un circuit hydraulique commun, les vannes en série sont physiquement reliées les unes aux autres par un raccord de liaison 26 percé de part en part par un trou 27 autorisant la circulation du fluide entre deux vannes consécutives 22 et 23 (figure $5_c$) Pour que le montage de ces vannes en série constitue un ensemble étanche, deux bouchons 25 ferment les entrées extrêmes.

Comme cela apparaît sur la figure 1 sur laquelle le corps de jonction 101 est représenté selon une coupe longitudinale, l'alésage cylindrique 2 du corps de la vanne dans lequel coulisse le piston 5 se prolonge dans le corps de jonction jusqu'à l'entrée du circuit hydraulique 6. Un raccord 28 permet d'ajuster avec précision le corps principal 100 et le corps de jonction 101 au niveau de cet alésage 2, ce raccord étant percé par une cavité cylindrique 29 de section $S_{29}$ sensiblement égale à la section S2 de l'alésage 2 et étant fixé aux deux corps par des vis par exemple. L'étanchéité du circuit hydraulique est assurée par deux joints 30 disposés autour du raccord 28.

Cette caractéristique de l'invention permet de réaliser des vannes modulaires pouvant être montées ensemble sans perte de place due à des raccordements par tubes extérieurs, avec des entrées de pression individuelles ou communes. En effet, l'interconnexion ainsi que l'étanchéité entre les vannes s'effectuent directement par leurs corps, sans nécessité de canalisation ou de raccord externe.

## Revendications

1. Vanne hydraulique permettant l'ouverture et la fermeture d'un circuit hydraulique, qui comprend :

   - un corps doté d'au moins une entrée (6) et une sortie (7) d'un fluide (1) et comportant un piston (5) de section $S_5$ déterminée coulissant dans un alésage cylindrique (2), de section $S_2$ sensiblement égale à la section du piston et pratiqué dans une cavité cylindrique (8) coaxiale de section $S_8$ et de longueur donnée L, ledit piston (5) comportant un épaulement (9) de section $S_9$ sensiblement égale à la section $S_8$ de la cavité (8) et de longueur l inférieure à la longueur L de la cavité créant une chambre à volume variable (10), et étant percé longitudinalement par un canal (11) de section $S_{11}$ inférieure à $S_5$, à partir de son extrémité (12) communiquant avec le fluide du circuit hydraulique jusqu'à la chambre (10) avec laquelle il communique par un trou transversal (13) pour amener la pression du fluide dans la chambre; et

   - des moyens de commande accouplés audit piston,

   caractérisée en ce que la section $S_9$ de l'épaulement (9) du piston (5) est déterminée en fonction des sections respectives $S_5$, $S_2$ et $S_{11}$ du piston (5), du tube (2) dans lequel il se déplace et du canal (11) creusé dans le piston de telle sorte que la force exercée par le fluide dans la chambre à volume variable (10) sur l'épaulement (9) soit inférieure à la force exercée par le fluide sur l'extrémité (12) ouverte du piston dans le cas d'une vanne normalement ouverte.

2. Vanne hydraulique selon la revendication 1, caractérisée en ce que les moyens de commande (15) de la vanne sont de type pneumatique, tels un vérin à deux entrées d'air (18).

3. Vanne hydraulique selon la revendication 1, caractérisée en ce que les moyens de commande (15) de la vanne sont de type électrique, tels un moteur pas à pas à deux sens de rotation agissant sur le piston (5) par l'intermédiaire d'une vis.

4. Vanne hydraulique selon la revendication 3, caractérisée en ce que en ce que la vanne fonctionne en mode tout ou rien.

5. Vanne hydraulique selon la revendication 4, caractérisée en ce que la vanne fonctionne en mode proportionnel.

6. Vanne hydraulique selon l'une des revendications 3 ou 4, caractérisée en ce qu'elle comporte des entretoises (16) maintenant les moyens de commande (15) solidaires de la vanne et des pieds d'orientation (17) reliant le piston (5) au corps (1) de la vanne.

7. Vanne hydraulique selon l'une des revendications 3 ou 4, caractérisée en ce qu'elle comporte des ressorts (19) reliant les moyens de commande (15) et le corps (1) de la vanne pour vaincre les forces de frottement au niveau des joints internes lors d'un changement d'état de la vanne.

8. Vanne hydraulique selon la revendication 1, caractérisée en ce que le corps (1) de la vanne se compose de deux parties, un corps principal (100) doté d'une sortie hydraulique individuelle (7) de la vanne, et un corps de jonction (101), doté d'une entrée hydraulique individuelle (6) parallèle à la sortie hydraulique (107), et de deux entrées hydrauliques (106) de raccordement, disposées selon une direction perpendiculaire à l'entrée individuelle (6) et dans le même plan transversal, le corps principal (100) et le corps de jonction (101) ayant des sections transversales identiques et étant solidaires grâce à des moyens de fixation (20).

9. Vanne hydraulique selon la revendication 8, caractérisée en ce qu'elle fonctionne individuellement, deux bouchons (25) étant placés aux deux entrées (106) de raccordement pour assurer leur fermeture étanche et la circulation du fluide dans le circuit hydraulique individuel de la vanne entre son entrée (6) et sa sortie (7).

10. Vanne hydraulique selon la revendication 8, caractérisée en ce que, dans le cas d'un montage de plusieurs circuits hydrauliques indépendants ayant chacun une vanne de commande, les vannes (22, 23) sont physiquement reliées les unes aux autres par leurs entrées (106) de raccordement placées en correspondance par l'intermédiaire d'un raccord de liaison (21) pour vannes indépendantes, ajusté par un épaulement et rendu étanche par des joints (24) et en ce que deux bouchons (25) obstruent les entrées non utilisées du corps de jonction.

11. Vanne hydraulique selon la revendication 8, caractérisée en ce que, dans le cas du montage d'un groupe de vannes ayant un circuit hydraulique commun, les vannes (22,23) en série sont physiquement reliées les unes aux autres par un raccord de liaison (26) percé de part en part par un canal (27) autorisant la circulation du fluide entre deux vannes consécutives, et en ce que deux bouchons (25) ferment les entrées extrêmes.

12. Vanne hydraulique selon la revendication 8, caractérisée en ce qu'au niveau du tube cylindrique (2) est placé un raccord (28) permettant d'ajuster avec précision le corps principal (100) et le corps de jonction (101), ce raccord étant percé par une cavité cylindrique (29) de section $S_{29}$ sensiblement égale à la section S2 dudit tube (2) et étant fixé aux deux parties (100,101) du corps et en ce que l'étanchéité du circuit hydraulique est assurée par deux joints (30) disposés autour du raccord (28).

EP 0 692 663 A1

FIG_1

6

FIG_2a

FIG_2b

FIG_3

FIG_5a

EP 0 692 663 A1

# FIG_4

9

## FIG_5c

## FIG_5b

Office européen
des brevets

**RAPPORT DE RECHERCHE EUROPEENNE**

Numero de la demande
EP 95 40 1669

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-2 086 541 (KOOMEY, INC.) <br> * page 2, ligne 11 - ligne 34; figure 1 * <br> --- | 1,2,4 | F16K39/02 |
| A | GB-A-2 017 266 (WOMA-APPARATEBAU) <br> * page 1, ligne 55 - ligne 109; figure 1 * <br> --- | 1-5 | |
| P,A | WO-A-94 16580 (GOUDSCHE MACHINEFABRIEK) <br> * page 7, ligne 31 - page 10, ligne 19; figure 2 * <br> ----- | 1,2,4 | |

| | DOMAINES TECHNIQUES RECHERCHES (Int.Cl.6) |
|---|---|
| | F16K |

Le présent rapport a été établi pour toutes les revendications

| Lieu de la recherche | Date d'achèvement de la recherche | Examinateur |
|---|---|---|
| LA HAYE | 26 Octobre 1995 | Christensen, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)